# FASCICULE DE BREVET EUROPEEN

(11) **EP 2 164 432 B1**
(45) Date de publication et mention de la délivrance du brevet: **23.03.2011**
(21) Numéro de dépôt: 08760928.5
(22) Date de dépôt: 12.06.2008
(51) Int. Cl.: A61F 5/01, B25J 9/00

(54) **MECANISME DE ROTATION D'AVANT-BRAS ET ORTHESE COMPORTANT UN TEL MECANISME**
UNTERARM-DREHMECHANISMUS UND ORTHESE MIT EINEM SOLCHEN MECHANISMUS
FOREARM ROTATION MECHANISM AND ORTHOSIS INCLUDING SUCH MECHANISM

(30) Priorité: 12.06.2007 FR 0755701
(43) Date de publication de la demande: 24.03.2010
(73) Titulaire: Commissariat à l'Énergie Atomique et aux Énergies Alternatives, 75015 Paris (FR)
(72) Inventeur: GARREC, Philippe, F-91190 Gif sur Yvette (FR)
(74) Mandataire: Ilgart, Jean-Christophe
(86) Numéro de dépôt international: PCT/EP2008/057388
(87) Numéro de publication internationale: WO 2008/155286

(56) Documents cités:
- EP-A- 1 138 286
- EP-A- 1 364 755
- WO-A-95/32842
- WO-A-2004/058458
- WO-A-2006/058442
- FR-A- 2 809 464
- US-A- 4 784 120
- US-A- 4 883 400
- US-A- 5 865 714
- US-A1- 2003 105 416

## Description

### DOMAINE TECHNIQUE ET ART ANTÉRIEUR

La présente invention se rapporte à des mécanismes de rotation d'avant-bras et à des orthèses ou exosquelettes comportant de tels mécanismes.

Les orthèses sont des organes apparentés à des manipulateurs motorisés disposés à l'extérieur d'un membre du corps humain et parallèlement à celui-ci. Elles permettent d'assister une personne en supportant par exemple le poids de son membre et en fournissant, le cas échéant, un effort complémentaire. Elles peuvent aussi être utilisées comme capteur de mouvement du membre tout en supprimant la fatigue nécessaire à son équilibre lors de diverses tâches : téléopération, études cliniques, etc.

Cependant leur réalisation se heurte à plusieurs difficultés.

D'une part, si la reproduction des axes de rotations transversaux est aisée en amenant en coïncidence un axe de rotation mécanique avec l'axe ou pseudo-axe de rotation anatomique, en revanche, la réalisation des axes longitudinaux (cas du bras ou de l'avant-bras par exemple) l'est beaucoup moins. La solution la plus courante consiste à utiliser un guidage annulaire, par exemple un roulement à billes, à l'intérieur duquel l'opérateur doit introduire le bras. Cette solution empêche une mise en place aisée et un dégagement rapide, ce qui est d'autant plus marqué pour une personne handicapée. Par ailleurs, la sensation psychologique d'emprisonnement est un frein au développement de telles orthèses. De plus, pour des raisons de sécurité, cette solution risque de ne pas être viable.

Afin d'éviter cette sensation d'emprisonnement, il a été développé un guidage circulaire ouvert dont l'axe de rotation fictif est amené en coïncidence avec les axes ou pseudo-axes anatomiques du membre. Il s'agit en fait d'un arc de cercle fixe formant rail sur lequel se déplace un chariot monté sur galet.

Le document US2006/0150753 décrit une orthèse pour membre supérieur partant de l'épaule jusqu'à l'avant-bras, associant un guidage semi-circulaire pour le bras et un guidage circulaire fermé pour l'avant-bras.

Chaque guidage est fixé rigidement sur une poutre, délimitant deux segments articulés l'un par rapport à l'autre.

Les poutres sont de taille importante pour supporter la masse des pièces mobiles et les efforts de flexion. Par ailleurs, les moyens d'actionnement ne sont pas déportés, ce qui alourdit encore chacun des segments. Cette orthèse est donc encombrante, d'une masse importante et d'inertie importante. Par ailleurs l'enfermement de l'avant-bras est rédhibitoire.

Le document WO2004/058457 décrit une orthèse pour avant-bras formée par un guidage semi-circulaire ouvert supporté par une poutre. Cette orthèse ne présente pas l'inconvénient de l'enfermement, cependant la poutre supportant le guidage est massive pour supporter le poids du guide et les efforts de flexion. Par ailleurs, afin de définir précisément la direction de l'axe de rotation défini par le guidage circulaire qui reproduit l'axe du membre à assister, il est nécessaire de recourir à un guidage et un chariot massifs. En effet, cet axe est défini uniquement par le guidage circulaire. Cette orthèse est donc encombrante et lourde, et présente une inertie importante.

Dans les mécanismes antérieurs, le bras de levier produit un moment de flexion important, ce qui provoque des contraintes locales très importantes sur le rail de guidage, d'où des frottements gênants lors des mouvements. De tels systèmes ont donc des limites de charge relativement faibles. Un des buts de l'invention est de proposer un mécanisme permettant de répartir et de dissocier les moments de flexion et l'effort tranchant.

Par ailleurs, on souhaite également pouvoir embarquer les actionneurs des deux axes transversaux du poignet, cependant dans les conceptions de l'état de la technique, leur masse est mise en rotation, ce qui implique une importante inertie.

C'est par conséquent un but de la présente invention d'offrir une orthèse de faible encombrement, de masse réduite, offrant une faible inertie et dont la mise en place est simple et rapide.

### EXPOSÉ DE L'INVENTION

Le but précédemment énoncé est atteint par un mécanisme selon la revendication 1, qui est un mécanisme de rotation d'avant-bras en forme de berceau délimité à l'avant par un montant mobile sur un mât et à l'arrière par un montant fixe sur le mât, les montants mobile et fixe étant reliés par des tiges rigides. Le montant mobile a sensiblement une forme courbe destinée à pivoter autour d'un axe destiné à être proche de l'axe longitudinal de l'avant-bras, et des moyens d'actionnement du montant avant monté sur le mât.

En d'autres termes, le mécanisme selon l'invention définit un axe de rotation longitudinal entre une partie mobile et une partie fixe, reliées entre elles par des tiges rigides en longueur et articulées à leurs extrémités, qui supportent l'essentiel des moments de flexion, la partie mobile comportant une piste de guidage en arc de cercle, et la partie fixe et la partie mobile étant également reliées en parallèle par un mât, rigidement lié à la partie fixe, pour supporter l'essentiel de l'effort tranchant, et relié à un palier porte-galets, dont les galets sont en contact roulant avec la piste de guidage en arc de cercle de la partie mobile. Ainsi, on obtient un axe de rotation précis tout en utilisant un guidage circulaire ouvert léger et peu encombrant. En effet, il n'est plus nécessaire d'utiliser un guidage circulaire apte à supporter seul tous les efforts, en particulier ceux de flexion. Le mécanisme selon l'invention utilise le principe des tiges articulées, qui optimisent la transmission du mouvement de rotation, et réduisent l'effet négatif des efforts de flexion, en les convertissant en des efforts de traction/compression dans les barres. Ainsi, le frottement sous la charge est également réduit.

Le mécanisme selon l'invention peut comporter :
- deux pièces, l'une fixe et l'autre mobile, reliées par des tiges rigides en longueur et articulées à chacune de leurs extrémités au moyen de liaisons rotules ou équivalent, pour équilibrer l'essentiel du moment de flexion,
- la pièce mobile courbe étant apte à recevoir le poignet de l'opérateur et comportant une piste de guidage en arc de cercle,
- un mât, reprenant l'essentiel de l'effort tranchant, lié rigidement à la pièce fixe à l'une de ses extrémités et relié à la pièce mobile à son autre extrémité par un palier porte-galets, comprenant un ensemble de trois galets au moins en contact roulant avec la piste de guidage en arc de cercle de la partie mobile, qui impose à la pièce mobile un mouvement de rotation autour du centre fictif de l'arc de cercle de guidage.

De préférence, le mât est réalisé par un treillis de barres légères dont la rigidité est telle que l'excentration de la pièce mobile ne produit pas de mouvements angulaires parasites perceptibles par l'utilisateur.

Dans un exemple particulier, le mécanisme selon l'invention comporte en outre :
- une transmission à engrenage parallèle formée d'un secteur denté lié à la pièce mobile et d'un pignon tournant dans un palier fixé au mât,
- un moteur disposé de préférence de façon déportée vers l'articulation transversale amont pour limiter l'inertie et le couple gravitaire sur cet axe et entraînant le pignon par un arbre léger et des accouplements flexibles si nécessaires.

L'invention offre un mécanisme ayant une morphologie ouverte et conique qui, alliée à la possibilité d'optimiser avec peu de contraintes la forme des pièces, permet d'épouser le membre sans l'enfermer et d'amener son axe longitudinal au voisinage de celui du mécanisme. Elle permet d'éviter le recours à un guidage circulaire fermé.

Par ailleurs, la masse en porte-à-faux du dispositif selon la présente invention par rapport à l'articulation transversale du membre est plus faible que pour un rail, sur lequel se déplace un patin à billes ou un rail sur lequel se déplacent des galets, car, d'une part, la pièce fixe est située à la base du membre au prix d'une masse de tiges négligeables et, d'autre part, la pièce mobile peut être réalisée sans inconvénient en matériau léger, puisque les contraintes reprises par les galets sont faibles du fait de la quasi absence de moment de flexion.

Le mécanisme de l'invention permet de découpler et de répartir les différents efforts : l'effort tranchant est essentiellement supporté par le mât, et les moments de flexion sont essentiellement supportés par les tiges.

Le mécanisme peut être avantageusement complété pour la commande des axes de poignet, offrant alors trois degrés de liberté.

Dans un exemple particulier, le mécanisme de rotation longitudinale comporte alors une platine remplaçant l'une des tiges, cette platine portant deux vérins à câbles ou actionneurs à câbles ayant la même fonction, reliée d'une part à la pièce mobile par deux liaisons pivots à axes orthogonaux concourants ou non et un jeu de poulies concentriques à chacun d'eux autorisant le cheminement des câbles vers le poignet et d'autre part à la pièce fixe par une rotule, un combiné rotule/pivot ou un combiné cardan/pivot.

La présente invention a alors principalement pour objet un mécanisme de rotation pour avant-bras comportant un montant mobile destiné à supporter un poignet, le montant mobile comportant au moins une piste de guidage en arc de cercle, un montant fixe destiné à supporter l'extrémité arrière d'un avant-bras, des tiges rigides en longueur reliant le montant mobile et le montant fixe et permettant une rotation du montant mobile par rapport au montant fixe autour d'un axe longitudinal, grâce à des liaisons articulées en rotation, et un mât lié à l'une de ses extrémités rigidement au montant fixe, et relié à son autre extrémité à un palier porte-galets, dont les galets sont en contact roulant avec la au moins une piste de guidage du montant mobile, les galets imposant un pivotement du montant mobile autour d'un axe longitudinal, la direction dudit axe longitudinal passant par le centre de l'arc de cercle de la piste de guidage d'une part, et par le centre d'un cercle défini par les extrémités des tiges reliées au montant fixe d'autre part.

De manière avantageuse, au moins une liaison articulée de chaque tige est une liaison rotule (ou rotule associée à une liaison pivot, pour augmenter son débattement dans certaines directions), ou une liaison équivalente composée de trois rotations autour de trois axes, par exemple, un cardan associé à une liaison pivot concourant au centre du cardan, ou tout autre liaison ou combinaison de liaison équivalente, et l'autre liaison articulée de chaque tige est une liaison permettant au moins deux rotations autour de deux axes orthogonaux concourants (cardan) ou non

Dans un exemple de réalisation, les liaisons articulées en rotation reliant les tiges à l'un parmi le montant mobile et le montant fixe sont des liaisons rotules (ou rotule associée à une liaison pivot, pour augmenter son débattement dans certaines directions), ou une liaison équivalente composée de trois rotations autour de trois axes, par exemple, un cardan associé à une liaison pivot concourant au centre du cardan, ou tout autre liaison ou combinaison de liaison équivalente et les liaisons articulées reliant les tiges à l'autre parmi le montant fixe et le montant mobile sont des liaisons permettant au moins deux rotations autour de deux axes orthogonaux concourants (cardan) ou non.

Les tiges articulées peuvent être reliées aux montants mobile et fixe au choix par deux rotules ou par une rotule et un cardan. Les rotules peuvent également être remplacées par des combinés rotule/pivot ou cardan/pivot. Dans une réalisation préférentielle, les tiges articulées sont reliées : au montant mobile par deux liaisons pivots à axes orthogonaux concourants ou non, et au montant fixe par des liaisons rotules ou combinées précédemment citées elles aussi identiques. On élimine ainsi une source de perturbation angulaire sur les axes transversaux qui résulterait de l'inhomogénéité des liaisons.

Les tiges rigides en longueur sont au nombre d'au moins trois. Elles permettent de réaliser un mécanisme léger et peu encombrant.

Le mât est avantageusement réalisé par un treillis de barres légères dont la rigidité est telle que l'excentration de la pièce mobile ne produit pas de mouvements angulaires parasites perceptibles par l'utilisateur.

Le montant fixe est avantageusement une portion d'arc de cercle de rayon supérieur à celui du montant mobile, de manière à définir un mécanisme de forme tronconique dont les tiges sont les génératrices. Cette configuration permet d'épouser au mieux la forme de l'avant-bras humain.

Le montant mobile est apte à se déplacer le long de l'axe longitudinal par rapport aux galets, en conséquence du mouvement des tiges.

Le guidage en rotation longitudinale du dispositif de l'invention peut être couplé à un système d'actionnement entraînant en rotation le montant mobile autour dudit axe longitudinal ; ce système d'actionnement peut comporter par exemple un pignon engrenant un secteur denté solidaire du montant mobile, le pignon étant entraîné par un moteur électrique.

Dans un autre exemple de réalisation, le système d'actionnement comporte une courroie engrenant d'une part un pignon et d'autre part un secteur denté solidaire du montant mobile, le pignon étant entraîné par un moteur électrique.

Dans un autre exemple de réalisation, le système d'actionnement comporte un vérin réversible à câble entraîné par un moteur électrique.

Dans une variante de réalisation, le mât peut comporter deux tiges latérales et une tige centrale, toutes trois connectées par une extrémité longitudinale au montant fixe et par une autre extrémité à un plaque de jonction portant le palier porte-galet, la tige centrale étant un arbre cannelé, le vérin à câble comportant un moteur (18) fixé sur le montant fixe, une vis sensiblement parallèle à l'arbre cannelé, un écrou monté sur la vis, un câble fixé à la vis et à la pièce mobile, ledit écrou étant entraîné en rotation par le moteur électrique, une douille apte à coulisser sur l'arbre cannelé, la douille étant solidaire de la vis, de sorte à l'empêcher de tourner

La solidarisation entre la douille et la vis est avantageusement du type élastique.

Le moteur entraîne l'écrou par exemple au moyen d'une courroie crantée entourant l'arbre cannelé.

Le palier porte-galet est avantageusement en porte-à-faux sur la plaque de jonction, décalée latéralement par rapport à l'axe longitudinal, ce qui permet de réduire l'encombrement transversal.

On peut prévoir, dans un cas, que la pièce mobile comporte des gorges pour guider les extrémités du câble, celles-ci ayant une forme telles qu'elles compensent le mouvement de translation longitudinal intrinsèque de la pièce mobile.

On peut prévoir, dans un autre cas, que la pièce mobile comporte des gorges pour guider les extrémités du câble, la pièce mobile étant articulée autour d'un axe transversal pour compenser le mouvement de translation longitudinal intrinsèque de la pièce mobile.

De manière avantageuse, le moteur est monté à proximité du montant fixe pour réduire la masse en porte-à-faux.

Le mécanisme selon l'invention peut avantageusement comporter deux articulations de rotation transverses destinées à reproduire les deux articulations du poignet, lesdites articulations étant situées au niveau du montant mobile.

Le mécanisme comporte, par exemple une platine reliée au montant mobile par deux liaisons pivots à axes orthogonaux et reliée au montant fixe par une liaison rotule (ou rotule associée à une liaison pivot, pour augmenter son débattement dans certaines directions), ou une liaison équivalente composée de trois rotations autour de trois axes, par exemple, un cardan associé à une liaison pivot concourant au centre du cardan, ou tout autre liaison ou combinaison de liaison équivalente, ladite platine supportant un premier actionneur apte à mettre en rotation un premier segment autour d'un axe du poignet et un deuxième actionneur apte à mettre en rotation un deuxième segment autour d'un axe du poignet, le deuxième segment étant porté par le premier segment.

Le premier et le deuxième actionneur peuvent avantageusement être des vérins réversibles à câble comportant chacun un câble se refermant en boucle et cheminant le long de la platine jusqu'à des poulies menantes solidaires en rotation du premier et deuxième segment respectivement.

Avantageusement, les poulies de renvoi sont d'axe confondu avec celui de l'une des liaisons pivots, afin d'éviter toute variation de la longueur du câble.

De manière avantageuse, les vérins à câble sont actionnés par des moteurs disposés sur la platine au plus près du montant fixe, ou fixés sur le montant fixe, chaque moteur étant alors relié à chacun des vérins par un arbre flexible ou un arbre doté d'un accouplement apte à tolérer un allongement.

La présente invention a également pour objet une orthèse pour membre supérieur à cinq axes de rotation comportant un mécanisme selon la présente invention, relié à un segment destiné à border le bras.

La présente invention a également pour objet une orthèse pour membre supérieur à sept axes de rotation comportant un mécanisme selon la présente invention, relié à un segment destiné à border le bras.

### BRÈVE DESCRIPTION DES DESSINS

La présente invention sera mieux comprise à l'aide de la description qui va suivre et des dessins en annexe, sur lesquels :
- la figure 1 est une représentation schématique en perspective d'un exemple de réalisation d'un mécanisme de guidage en rotation autour d'un axe longitudinal à un degré de liberté pour orthèse de l'avant-bras selon la présente invention,
- la figure 2 est une vue en perspective du mécanisme de la figure 1 dans une réalisation industrielle,
- la figure 3 est un schéma représentant la déformation du mécanisme,
- la figure 4 est une représentation schématique du mécanisme de la figure 1 muni d'un actionneur à engrenage,
- la figure 5 est une représentation schématique du mécanisme de la figure 1 muni d'un actionneur à vérin à câble,
- la figure 6A est une vue en perspective d'une orthèse selon l'invention à cinq axes,
- les figures 6B à 6D sont respectivement des vues en perspective avant, arrière et de détail d'une orthèse selon l'invention à cinq axes,
- la figure 7 est une représentation schématique d'un exemple de réalisation d'un avant-bras à trois degrés de liberté pour orthèse selon la présente invention,
- la figure 8 est une représentation schématique d'une variante du mécanisme de la figure 7,
- la figure 9 est une représentation schématique d'une variante du mécanisme de la figure 7, dans laquelle les moteurs sont fixes,
- la figure 10A est une vue en perspective du mécanisme de la figure 7 dans une réalisation industrielle,
- la figure 10B représente la même vue que celle de la figure 10A, le mécanisme comportant un capot de protection,
- la figure 11 est une vue en perspective d'une orthèse selon l'invention à sept axes,
- les figures 12A et 12B sont des représentations schématiques de dessus et de côté d'une variante de réalisation d'un mécanisme selon la présente invention,
- les figures 12C à 12F sont des vues d'une réalisation industrielle de la variante des figures 12A et 12B, en perspective isométrique, de trois quart, de dessus et de côté respectivement,
- les figures 13A à 13C sont des représentations schématiques de variantes de réalisation de mécanismes selon l'invention dans lesquels le cheminement des câbles des moyens d'entraînement autour des axes X et Y1 ont été modifiés,

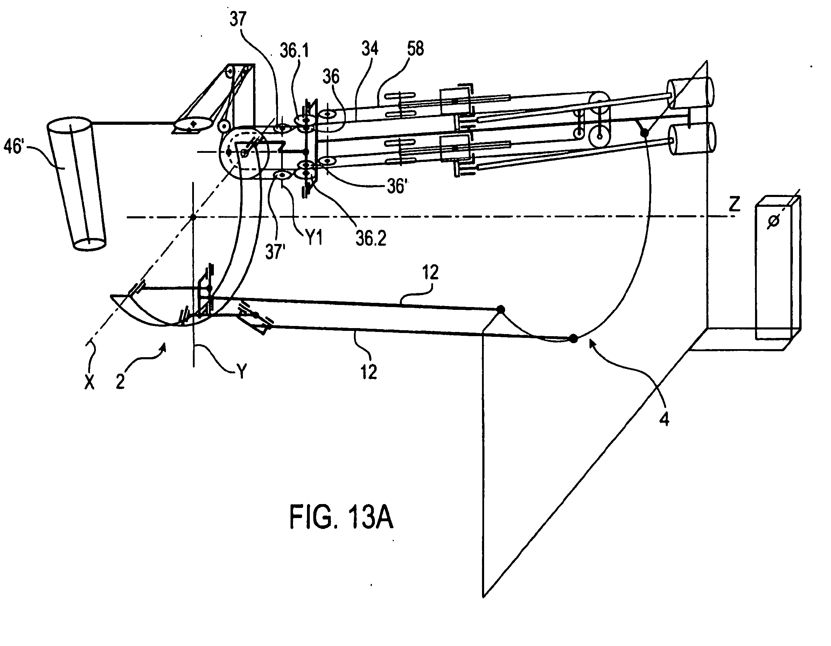

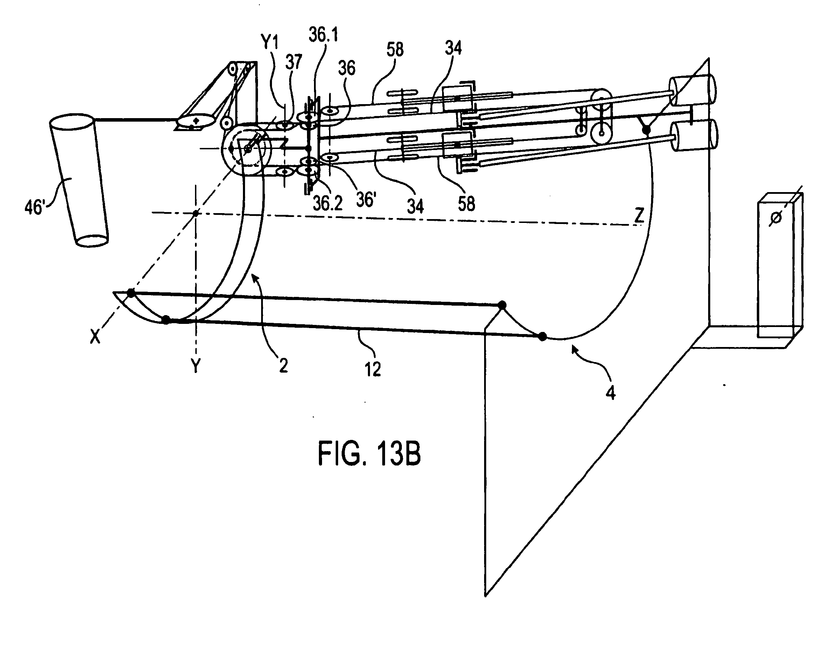

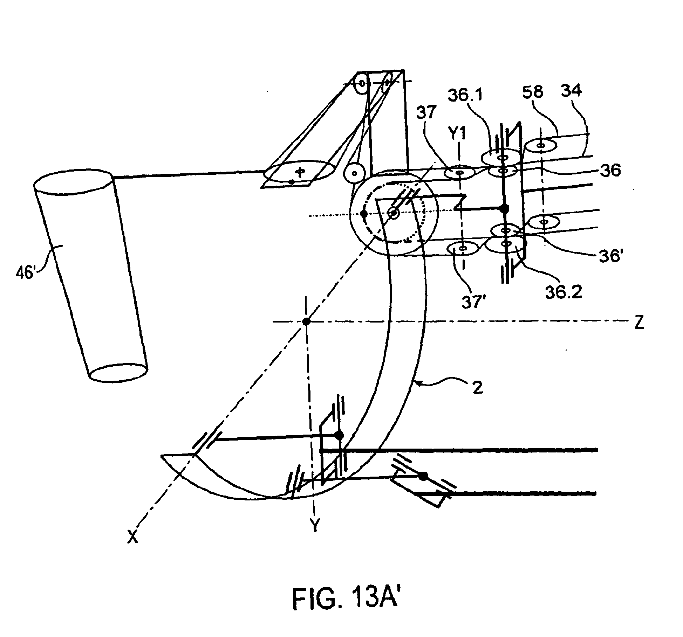

- la figure 13A' est une vue de détail de la figure 13A.

### EXPOSÉ DÉTAILLÉ DE MODES DE RÉALISATION PARTICULIERS

Le mécanisme de rotation pour orthèse d'avant-bras selon la présente invention est destiné à recevoir un avant-bras 1, l'axe longitudinal de l'avant-bras 1 étant alors sensiblement confondu avec celui du mécanisme.

Les termes « avant » et « arrière » seront utilisés par analogie avec l'avant et l'arrière de l'avant-bras. Ainsi l'avant correspondra à l'extrémité destinée à être du côté de la main et l'arrière correspondra à l'extrémité destinée à être du côté du coude.

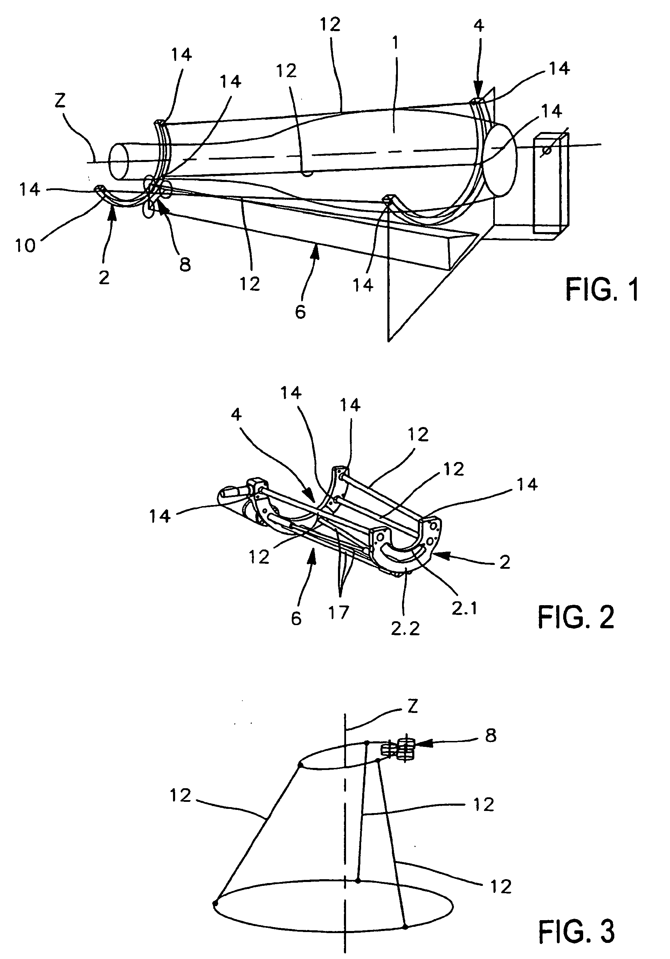

Le mécanisme représenté sur la figure 1 comporte un montant avant 2, un montant arrière 4 et un mât rigide 6 reliant les montants avant 2 et arrière 4.

Le montant avant 2 ou montant mobile a la forme d'une portion d'arc de cercle destinée à être montée mobile sur le mât 6. Le montant mobile 2 est apte à pivoter dans un plan P sensiblement orthogonal à l'axe de l'avant-bras autour d'un axe longitudinal Z sensiblement colinéaire avec celui de l'avant-bras 1.

Le montant mobile 2 est monté mobile sur le mât 6 au moyen d'un palier porte-galets, comprenant des galets 8, par exemple trois galets solidaires du mât 6 et roulant sur deux pistes cylindriques 10 concentriques formées sur le montant mobile 2. Par exemple, deux galets 8 roulent sur une piste extérieure 10 du montant mobile 2 et un galet roule sur une piste intérieure 10 du montant mobile 4, en regard des deux autres galets 8.

Les galets 8 sont montés sur le mât 6 au moyen d'un palier, leur axe étant sensiblement parallèle à l'axe Z.

Comme nous le verrons dans la suite de la description, la coopération entre les galets 8 et les pistes 10 permet également un déplacement selon Z du montant mobile.

Le montant fixe 4 est relié rigidement au mât 6, par tout moyen approprié, par exemple par encastrement.

Le mât 6 est par exemple réalisé sous la forme d'un treillis de barres légères dont la rigidité est telle que l'excentration ne produit pas de mouvements angulaires parasites perceptibles par l'utilisateur. Le mât peut être réalisé en acier, ou en carbone par exemple.

Des tiges 12 rigides en longueur relient longitudinalement les montants mobile 2 et fixe 4. Les tiges se raccordent au niveau de chacune de leurs extrémités longitudinales aux montants mobile 2 et fixe 4 par une liaison articulée en rotation. Dans l'exemple représenté, cette liaison articulée en rotation est une rotule 14.

L'ensemble des tiges 12 équilibrent les moments de flexion.

Au moins l'une des liaisons articulées est soit une liaison rotule (ou rotule associée à une liaison pivot, pour augmenter son débattement dans certaines directions), soit une liaison équivalente composée de trois rotations autour de trois axes, par exemple, un cardan associé à une liaison pivot concourant au centre du cardan, ou tout autre liaison ou combinaison de liaison équivalente.

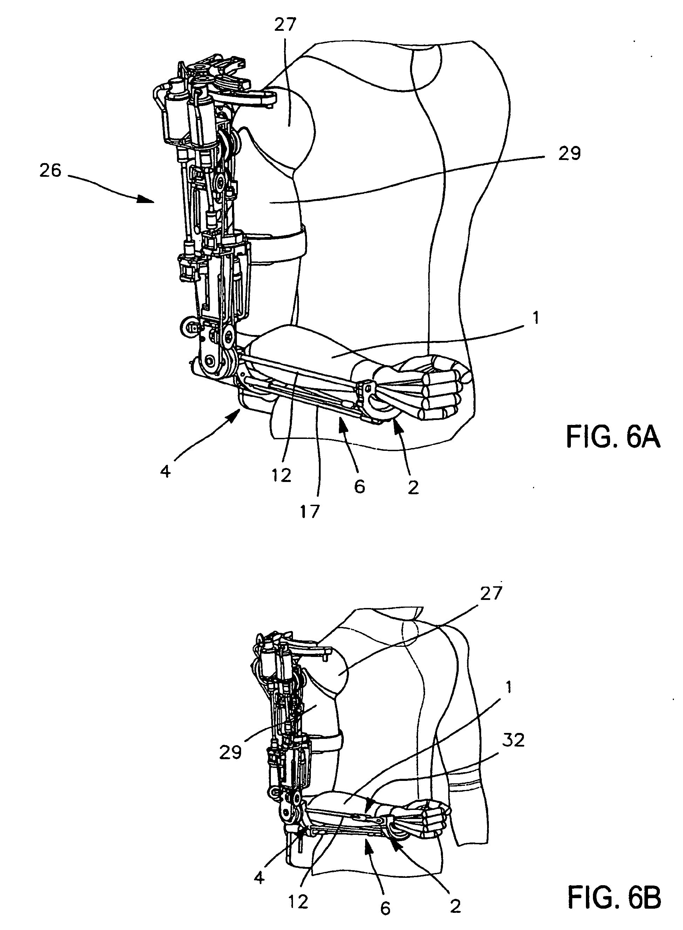

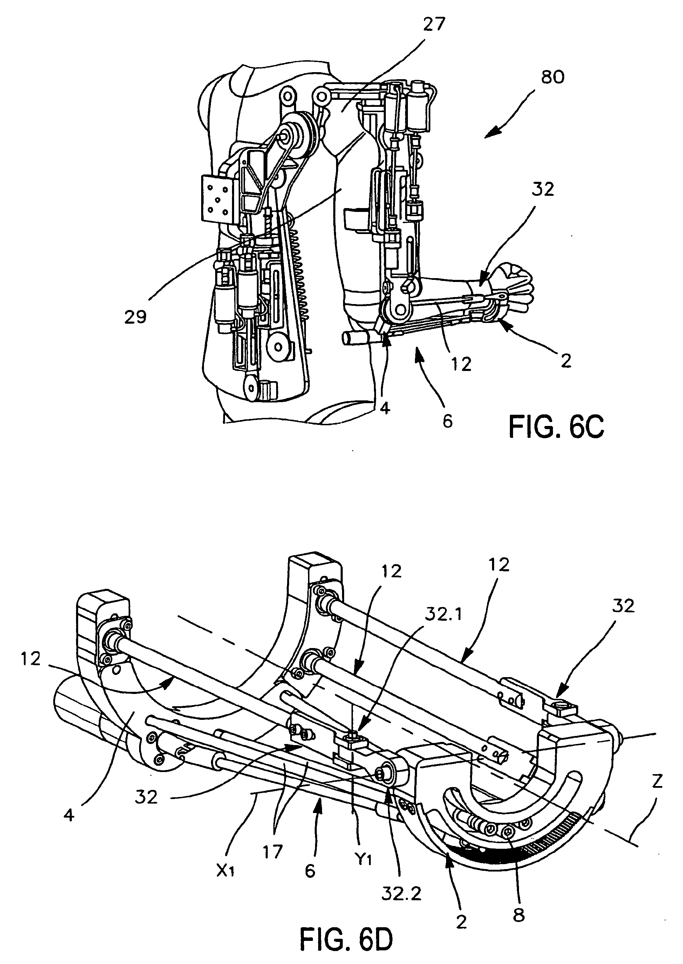

L'autre liaison articulée peut également être du type rotule, mais on peut prévoir simplement une liaison articulée permettant deux rotations autour de deux axes orthogonaux concourants (cardan) ou non, comme cela est représenté sur les figures 6B à 6D.

De manière avantageuse, on peut prévoir que les tiges 12 soient articulées sur le montant mobile par une liaison cardan associée à une liaison pivot et sur le montant fixe par une liaison cardan. Ainsi, des tiges 12 munies à leurs deux extrémités de cardans peuvent être fabriquées industriellement, ce qui permet de réduire les coûts de fabrication, en effet les cardans sont des liaisons courantes. Le pivot est par exemple un pivot à billes qui est moins encombrant qu'une liaison rotule.

En effet, il n'est pas nécessaire que les tiges 12 soient reliées par deux liaisons rotules aux montants 2, 4. De préférence, dans ce cas, les trois tiges ont des liaisons rotules au niveau des extrémités reliées au même montant, et des liaisons cardans à leurs autres extrémités. De manière avantageuse, les liaisons sont homogènes sur chaque montant de façon à éviter une source de perturbations angulaire supplémentaire sur les axes transversaux.

On pourrait également prévoir de réaliser les liaisons entre la tige 14 et les montants fixe 4 et mobile 2 directement par articulations élastiques.

De manière avantageuse, le montant fixe 4 a également la forme d'un arc de cercle, de diamètre plus grand que celui du montant mobile 2, afin de délimiter un espace intérieur tronconique se rapprochant du contour extérieur de l'avant-bras 1. L'orthèse a alors sensiblement la forme d'un tronc de cône dont les tiges 12 forment ses génératrices.

Dans la suite de la description, nous considérerons, sauf exception, que les liaisons entre les tiges 12 et les montants avant 2 et arrière 4 sont des liaisons rotules.

L'axe longitudinal Z de rotation du mécanisme passe par les centres fictifs au niveau des montants mobile 2 et fixe 4 définis par les trois liaisons rotules 14 reliant les tiges aux montants mobile 2 et fixe 4. Le centre fictif des liaisons rotules sur le montant mobile 2 est également confondu avec le centre d'un cercle duquel est issu le montant mobile 2. Le centre fictif du cercle est déterminé par l'intersection des médiatrices des segments reliant la succession des rotules. Par ailleurs, lorsque le mécanisme est dans sa position de référence, les points d'ancrage des rotules ou les axes d'ancrage des cardans d'une même tige sont par construction dans des plans radiaux du cône fictif du mécanisme, ce qui permet de supprimer une source de perturbation angulaire sur les axes transverses.

Les deux rotations transversales au niveau du montant mobile 2 étant bloquées, les tiges 12 équilibrent le moment fléchissant appliqué sur le montant mobile 2 et le mât 6 transmet essentiellement la résultante transversale ou effort tranchant.

Sur la figure 2, on peut voir une réalisation industrielle de l'orthèse, en particulier on peut voir le montant mobile 2.

Le mât 6 est formé par trois tiges connectées 17 par une extrémité longitudinale sur le montant fixe 4 et par leur autre extrémité longitudinale fixée à une plaque de jonction portant le palier porte-galet.

Les extrémités des tiges 17 connectées au montant fixe 4 sont disposées de sorte à former un triangle reproduisant la forme générale du mât représenté par exemple sur la figure 1.

Dans cet exemple, celui-ci comporte une surface intérieure 2.1 épousant sensiblement la forme du poignet, ainsi lorsque l'avant-bras est mis en place dans le mécanisme, le poignet est maintenu transversalement et en rotation longitudinalement. Le montant mobile 2 comporte deux pistes cylindriques concentriques de guidage 2.2, qui coopèrent avec les galets 8.

Selon la présente invention, ce guidage permet le déplacement du montant mobile 2 le long de l'axe Z par rapport au mât.

En effet, lors de la rotation de l'avant-bras autour de son axe longitudinal, il y a une faible variation de longueur de celui-ci, cette variation correspond, pour le cas d'un avant-bras humain, à quelques millimètres pour un angle de rotation de 120°. La présente invention permet un tel déplacement.

Ce déplacement longitudinal selon Z est rendu possible grâce au guidage par galets et piste cylindrique.

Par ailleurs, il y a apparition d'oscillations angulaires perturbatrices sur les deux axes transversaux, dès qu'il y a excentration du montant mobile 2 par rapport au montant fixe 4, notamment en raison des incertitudes d'usinage et/ou de la déformation de la structure sous charge, comme cela est schématisé sur la figure 3.

Il est préférable de minimiser l'amplitude des oscillations en limitant la flèche du mât sous charge afin :
- qu'elles restent imperceptibles à l'utilisateur,
- qu'elles n'entraînent pas de coincement si un jeu de fonctionnement s'avère nécessaire entre les galets et le montant mobile,
- qu'elles n'entraînent pas de contraintes excessives dans le mécanisme si une précontrainte est nécessaire entre les galets et le montant mobile pour garantir une géométrie rigoureuse par exemple en cas d'utilisation d'un entraînement par engrenage ; dans ce cas on pourra prévoir un dispositif rotulant entre le porte-galet et le mât, par exemple une rotule ou pièce flexible équivalente, permettant de les maintenir en contact sous faible contrainte.

Le mécanisme d'avant-bras selon la présente invention comporte également des moyens d'entraînement 15 en rotation autour de l'axe Z.

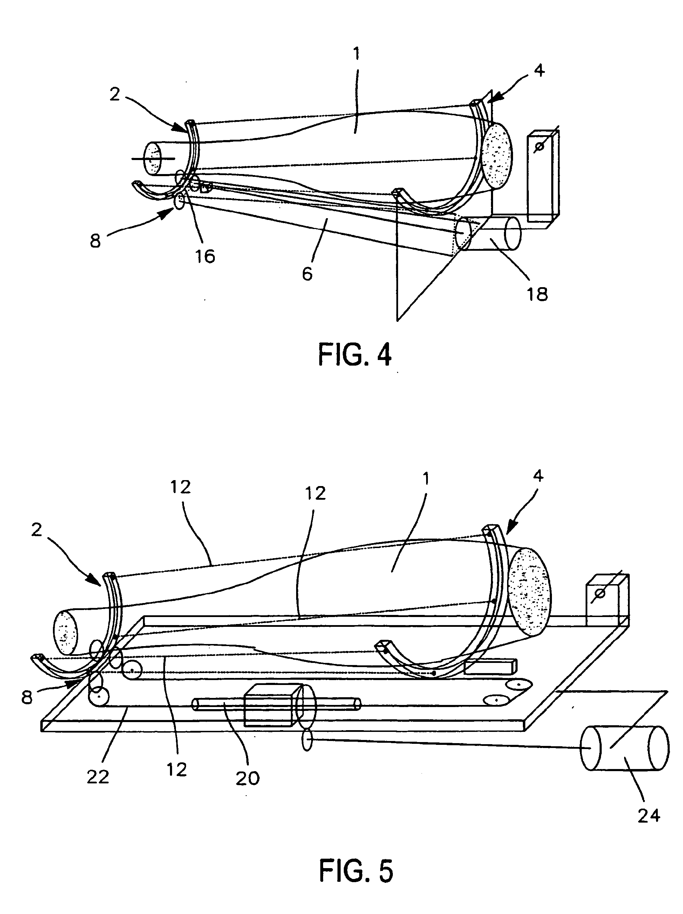

De manière avantageuse, et comme cela est représenté sur la figure 4, les moyens d'entraînement 15 comportent un pignon denté 16 monté sur le mât 6 et qui engrène un secteur denté (non visible) fixé sur le montant mobile 2. Ainsi la rotation du pignon 16 provoque la rotation du montant mobile 2 autour de l'axe Z.

Le pignon denté 16 est entraîné en rotation par un moteur électrique 18 fixé sur le montant fixe 4. De manière avantageuse, le moteur 18 est fixé au niveau d'une extrémité arrière 6.1 du mât 6 afin de réduire la masse en porte-à-faux du côté du montant mobile 2, et par conséquent de l'extrémité avant de l'avant-bras.

La transmission entre le moteur 18 et le pignon denté 16 est alors obtenue au moyen d'un arbre flexible et des accouplements flexibles ou cardans 19.

Cette transmission permet de réduire encore l'inertie de rotation autour de l'axe longitudinal.

On peut également utiliser une courroie dentée pour entraîner le secteur denté porté par le montant mobile 2.

On peut également, comme cela est représenté sur la figure 5, utiliser un vérin à câble pour entraîner le montant mobile 2.

Le vérin à câble comporte une tige filetée creuse 20 dans laquelle est fixé un câble 22 formant une boucle. Un écrou entrainé en rotation par un moteur 24 déplace longitudinalement la tige filetée creuse 20 parallèle à l'axe Z. Le câble 22 entraîne en rotation les galets 8 ou un pignon engrenant un secteur dentée solidaire du montant mobile 2.

Le fonctionnement d'un vérin à câble est expliqué en détail par exemple dans l'article « Une nouvelle technologie d'orthèse portable », Handicap 2004, p. 170-175 ainsi que dans le brevet FR2809464.

Ce type d'entraînement est adapté puisqu'il présente une tolérance suffisante au mouvement axial requis et une capacité d'effort suffisante. Il présente cependant un volume et un poids plus élevé qu'un simple entraînement à engrenage.

On peut également envisager d'utiliser un cabestan à câble pour effectuer un tel entraînement.

Le mécanisme de rotation d'avant-bras selon la présente invention est parfaitement adapté à la réalisation d'une orthèse à cinq axes comme représentée sur les figures 6A à 6D.

L'orthèse 26 s'étend de l'épaule 27 à l'avant-bras 1. On parle de cinq axes car elle reproduit les trois axes de l'articulation épaule-bras 29 assimilable à une liaison rotule, un axe de rotation de l'articulation entre le bras et l'avant-bras et l'axe de rotation longitudinale de l'avant-bras réalisé par le mécanisme selon l'invention.

Sur la figure 6A, les tiges rigides en longueur 12 sont reliées aux montants fixes et rigides par des liaisons rotules 14.

Le mât 6 est formé par trois tiges connectées 17 par une extrémité longitudinale sur le montant fixe 4 et par leur autre extrémité longitudinale fixée à une plaque de jonction portant le palier porte-galet.

Les extrémités des tiges 17 connectées au montant fixe 4 sont disposées de sorte à former un triangle reproduisant la forme générale du mât représenté par exemple sur la figure 1.

Sur les figures 6B à 6D, les tiges rigides en longueur 12 se raccordent chacune au montant fixe 4 par une liaison rotule 14 et au montant mobile par une liaison 32 formée par une première liaison pivot 32.1 d'axe de rotation Y1 (vertical dans la représentation de la figure 6D et une deuxième liaison pivot 32.2 d'axe de rotation X1 (horizontal dans la représentation de la figure 6d), les axes X1 et Y1 étant décalés (non concourants).

Dans l'exemple représenté sur les figures 6B à 6D, la tige 12 est fixée rigidement à une ferrure de la première liaison pivot 32.1.

Cette orthèse 26 permet d'effectuer un certain nombre de tâches pour lesquelles les mouvements angulaires des deux axes terminaux du poignet ne sont pas décisifs. Cette orthèse offre un rapport efficacité sur coût intéressant, en effet sa complexité étant moindre, son coût de revient est réduit.

Comme on peut le voir sur les figures 6A à 6D, l'orthèse à cinq axes selon l'invention est dotée d'une forme épousant au mieux le corps humain sans l'enfermer.

L'orthèse utilise avantageusement des vérins à câbles pour effectuer au moins certaines des rotations autour des autres axes de rotation. Elle permet alors grâce à la technologie de ses actionneurs de type vérin à câble un retour d'effort intégral qui autorise une commande hybride en force et en position, une protection contre les efforts excessifs et la possibilité d'équilibrer l'ensemble membre supérieur humain-orthèse sans bloquer les mouvements de l'opérateur.

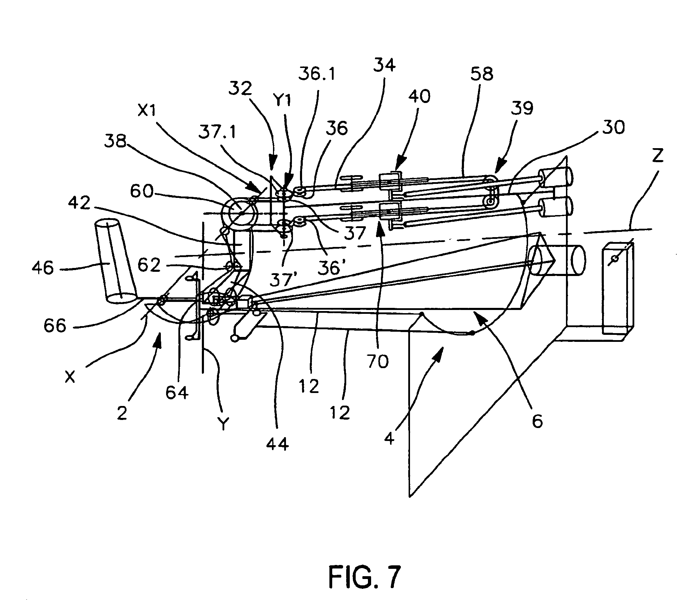

Sur la figure 7, on peut voir le mécanisme de rotation d'avant-bras associé à des moyens permettant d'obtenir les deux axes de rotation du poignet.

Le poignet comporte deux axes de rotation orthogonaux l'un par rapport à l'autre et orthogonaux à l'axe de rotation de l'avant-bras. Le poignet, du point de vue mécanique, peut être comparé à un cardan reliant l'avant-bras à la main.

Le mécanisme d'avant-bras selon la figure 7 comporte, à la place d'une des tiges 12, une platine 30 reliant le montant fixe et le montant mobile 2, et sur laquelle sont fixés les moyens de commande des deux axes de rotation du poignet.

De manière avantageuse, la platine 30 est reliée au montant mobile 2, non pas par une liaison rotule mais, de manière préférée, par une liaison 32 formée de l'association de deux liaisons pivots d'axe X1, Y1 orthogonaux, ce qui permet d'assurer la stabilité longitudinale de la platine en supprimant le degré de liberté en rotation sur son axe longitudinal selon l'axe Z. Par ailleurs, dans le cas où les deux rotations sont obtenues par des vérins à câbles, l'acheminement des câbles est obtenu par des poulies de renvoi montées concentriquement sur les deux axes des deux liaisons pivots à axes orthogonaux, comme cela va être décrit.

Le platine 2 est liée mécaniquement au montant fixe 4 par une liaison rotule, une liaison combinée rotule/pivot ou une liaison combinée cardan/pivot ou tout autre liaison ou combinaison de liaison équivalente.

Les axes transverses du poignet à reproduire seront désignés X et Y dans la suite de la description, ces axes X, Y sont orthogonaux entre eux et à l'axe Z longitudinal.

Nous allons tout d'abord décrire les moyens permettant une rotation autour de l'axe X.

De manière préférée, l'actionnement autour de l'axe X est obtenu au moyen d'un vérin à câble 40 déplaçant un câble 34. Le câble 34 présente l'avantage d'assurer un renvoi d'angle simple et pratiquement sans perte. Par ailleurs, il offre une faible inertie et des frottements réduits.

Le câble 34 est refermé en boucle et solidaire du vérin à câble 40 fixé sur la platine 30.

Le vérin à câble est particulièrement avantageux en raison de sa morphologie longiligne qui s'adapte à la forme de l'avant-bras et des efforts importants obtenus qui s'accordent avec la taille réduite des poulies menantes des deux axes de poignet qui seront décrites ci-dessous. Par ailleurs, ce type d'actionneur confère à l'avant-bras une aptitude complète au retour d'effort en offrant un faible seuil et un haut rendement en effort.

Dans la suite, le sens aller désignera le sens de l'avant-bras vers le poignet et le sens retour le sens du poignet vers l'avant-bras.

Dans l'exemple de réalisation représenté, le câble 34 chemine dans le sens aller le long de la platine 30 au moyen d'une poulie 36 jusqu'à une poulie de renvoi 37 d'axe Y1, puis jusqu'à une poulie menante 38 coaxiale à l'axe X1 de la liaison pivot 32.2, de laquelle il est solidaire en rotation. L'axe X1 est confondu dans cette réalisation avec l'axe X.

Puis, dans le sens retour, après avoir tourné autour de la poulie 38, il s'enroule sur une deuxième poulie de renvoie 37' d'axe Y1, puis chemine sur une autre poulie 36', coaxiale à la poulie 36, et est amené vers l'arrière du vérin par des poulies de renvoi 39.

La poulie 38 est montée mobile en rotation sur une extrémité avant de la platine 30.

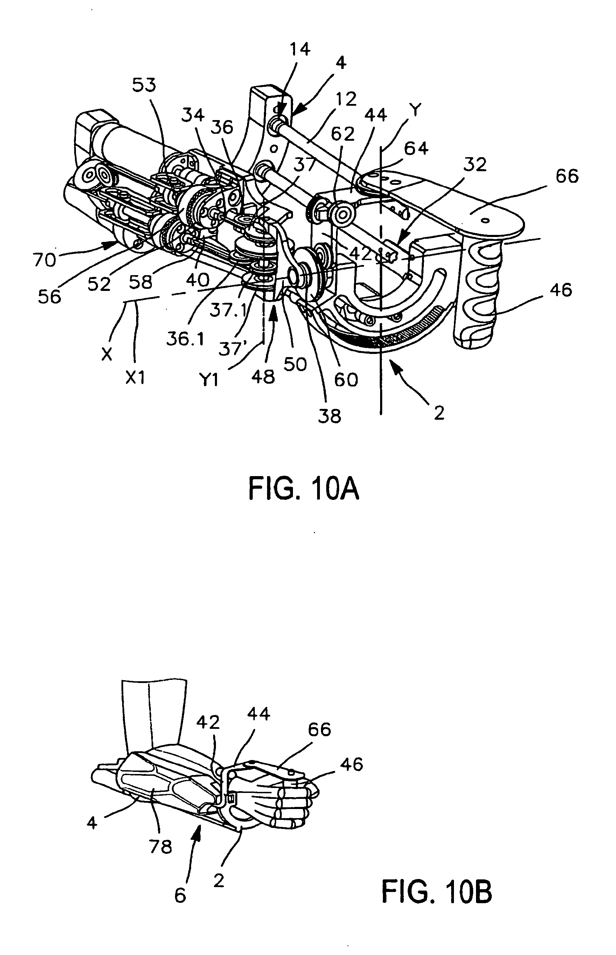

Un premier segment 42 est fixé sur la poulie 38 perpendiculairement à l'axe X1 et s'étend vers le haut en éloignement du montant mobile 2 visible sur la figure 10A.

Un deuxième segment 44 est fixé orthogonalement au premier segment 42 auquel est fixée une poignée 46.

Les poulies 37, 37' sont montées sur un axe d'une chape 48 et la poulie 38 est montée en rotation sur une la platine 50 de la chape 48.

Dans l'exemple représenté, le vérin à câble 40 est monté sur la platine 30, de telle sorte que le câble 34 s'étende selon un axe sensiblement parallèle à l'axe Z, mais cette configuration n'est aucunement limitative. En effet les poulies de renvoi assurent l'orientation adéquate du câble.

Le vérin à câble 40 comporte un bâti, une vis creuse 53 vissée dans un écrou 52 monté sur un palier rotatif par rapport au bâti, un moteur destiné à entraîner l'écrou 52 par une courroie crantée 56, le cas échéant par un moteur creux entraînant l'écrou concentriquement, des moyens d'anti-rotation de la vis creuse permettant à la vis creuse de se déplacer longitudinalement parallèlement à l'axe Z. Les moyens d'anti-rotation sont de type connu et ne seront pas décrits en détail. On pourra se référer à l'article « Une nouvelle technologie d'orthèse portable », Handicap 2004, p. 170-175, pour plus de détails sur ce type d'actionneur longiligne, ainsi qu'au brevet FR2809464.

Les extrémités du câble sont ancrées sur les gorges des poulies menantes de manière à former une boucle et d'autre part le câble est ancré en un point situé à l'intérieur de la vis creuse au voisinage de son milieu. Ainsi, l'actionnement du moteur provoque une rotation de l'écrou et le déplacement parallèlement à l'axe Z de la vis creuse, qui entraîne le câble 34 également parallèlement à l'axe Z.

Nous allons maintenant décrire les moyens permettant une rotation autour de l'axe Y.

Un câble 58 est également utilisé, celui-ci chemine dans le sens aller le long d'une poulie 36.1 ; tourne autour de l'axe Y1 au moyen d'une poulie de renvoi 37.1, puis chemine sur une autre poulie de renvoi 60 d'axe parallèle à celui de la poulie 38, puis chemine le long du premier segment 42 tourne autour d'une poulie de renvoi 62, puis s'enroule autour d'une poulie menante 64 d'axe Y, à laquelle il est fixé afin que son déplacement provoque la rotation de la poulie 64 et inversement.

La poulie 64 est montée libre en rotation à l'extrémité du deuxième segment 44, de laquelle est solidaire en rotation un troisième segment 66 d'axe parallèle à l'axe Z, la poignée 46 d'axe sensiblement parallèle à Y étant fixée sur l'extrémité libre du troisième segment 66.

Le câble 58 retourne vers l'arrière du vérin à câble 70 par des poulies d'axe parallèle aux poulies 36.1, 37.1, 60, une poulie de renvoie 63 est également prévu située au niveau de la poulie de renvoi 62 son axe étant incliné par rapport à celui de la poulie 62 pour ramener le câble 58 vers la poulie d'axe parallèle à la poulie 60.

D'une manière générale connue de l'homme de l'art, lors du franchissement des axes X1 et Y1, il est préférable que les brins de câble aller et retour s'appuient sur les poulies de renvoi de part et d'autre de leurs axes afin que le câble conserve une longueur constante. Ce cheminement sera décrit en relations avec les figures 13A à 13C et 13A'.

Le câble 58 est ancré dans une vis creuse d'un vérin à câble 70 similaire au vérin à câble 40 et ne sera pas décrit en détail.

Le vérin à câble 70 est monté sur la platine 30 parallèle au vérin à câble 40, le câble 58 sur un chemin sensiblement parallèle à celui du câble 34, mais ceci n'est pas limitatif. On pourrait en effet prévoir qu'il suive un chemin non parallèle en fonction de la configuration du mécanisme.

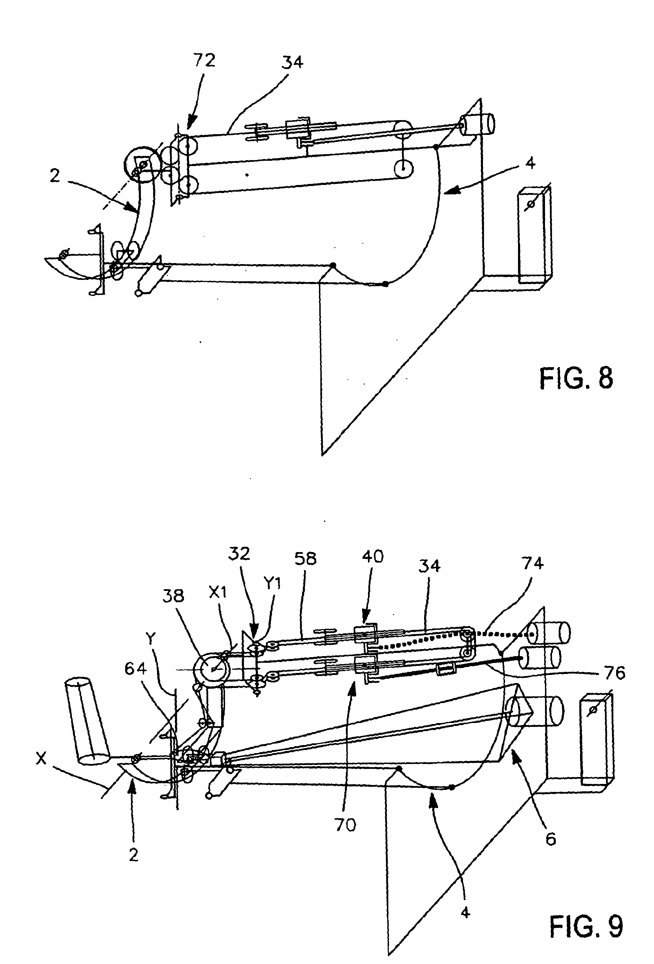

Sur la figure 8, on peut voir une variante de réalisation du dispositif de la figure 7, dans laquelle le franchissement de l'axe Y1 s'effectue au moyen de poulies 72 d'axe orthogonal à l'axe Y1, qui amènent le câble dans l'alignement de Y1.

Cette variante de réalisation permet de supprimer le couple sur l'axe Y1, cependant elle génère une légère variation de la longueur du câble et donc une légère variation de la tension du câble.

Les moteurs sont avantageusement déportés près du montant fixe, ce qui réduit leur vitesse de giration et donc leur influence sur l'inertie de rotation de l'avant-bras.

Comme cela est représenté sur la figure 8, on peut également envisager d'avoir des moteurs fixes, montés directement sur le montant fixe pour réduire davantage l'inertie. Ce montage est possible en utilisant un arbre flexible 74 ou un arbre rigide 76 doté d'un accouplement tolérant un allongement, du type accouplement à soufflet ou arbre cannelé.

Une variante de réalisation du mécanisme consiste à remplacer les deux liaisons pivot 32 soit par deux rotules soit par une liaison combinée rotule/pivot ou une liaison combinée cardan/pivot ou tout autre liaison ou combinaison de liaison équivalente. Dans ce cas, une perturbation angulaire peut apparaître en raison de l'inhomogénéité des liaisons mais elle peut être limitée de façon suffisante en éloignant les deux tiges à rotules 12 de la platine 30.

Sur la figure 10A, on peut voir une réalisation industrielle du mécanisme reproduisant les trois axes de l'avant-bras et du poignet, les câbles 34 et 58 n'étant représentés qu'aux environs des vérins à câbles 40 70 respectivement.

Le mât 6 est formé par trois tiges connectées 17 par une extrémité longitudinale sur le montant fixe 4 et par leur autre extrémité longitudinale fixée à une plaque de jonction portant le palier porte-galet.

Les extrémités des tiges 17 connectées au montant fixe 4 sont disposées de sorte à former un triangle reproduisant la forme générale du mât représenté par exemple sur la figure 9.

Sur la figure 10B, on peut voir le mécanisme comportant un capot de protection 78 monté sur un avant-bras. On peut alors constater son faible encombrement.

Les deux câbles de commande du cardan du poignet subissent un effet de couplage du fait du mouvement angulaire des tiges 12 qui produit un petit angle sur l'un et l'autre des axes X1, Y1 décalés de la liaison 32. Son effet total cumule l'effet sur chaque axe X1, Y1 lui-même proportionnel à son angle. L'effet est non linéaire en raison de la non linéarité géométrique des angles par rapport à l'angle de rotation de l'avant-bras. Dans ce cas, cet effet peut être facilement compensé par une loi de commande calculée en temps réel classique, rigoureuse ou approchée par un polynôme.

La boucle de câble 58 commandant l'axe Y de cardan du poignet franchit l'axe X par des poulies de renvoi et est donc couplée linéairement à cet axe et sa compensation est réalisée simplement de façon connue, par un découplage linéaire (matrice de transmission).

Afin de réduire les perturbations cinématiques angulaires sur les deux axes transversaux impliquées par le remplacement d'une tige 12 par la platine 30 formant un élément hétérogène, on diminue le décalage des axes X1, Y1 de la liaison 32 de cheminement des câbles et on éloigne les deux tiges à rotules 12. Ces perturbations peuvent être limitées à environ 1° pour un système ayant les proportions d'un avant-bras humain. Ce défaut peut être toléré en prévoyant un guidage axial du montant mobile selon l'axe Z par les galets.

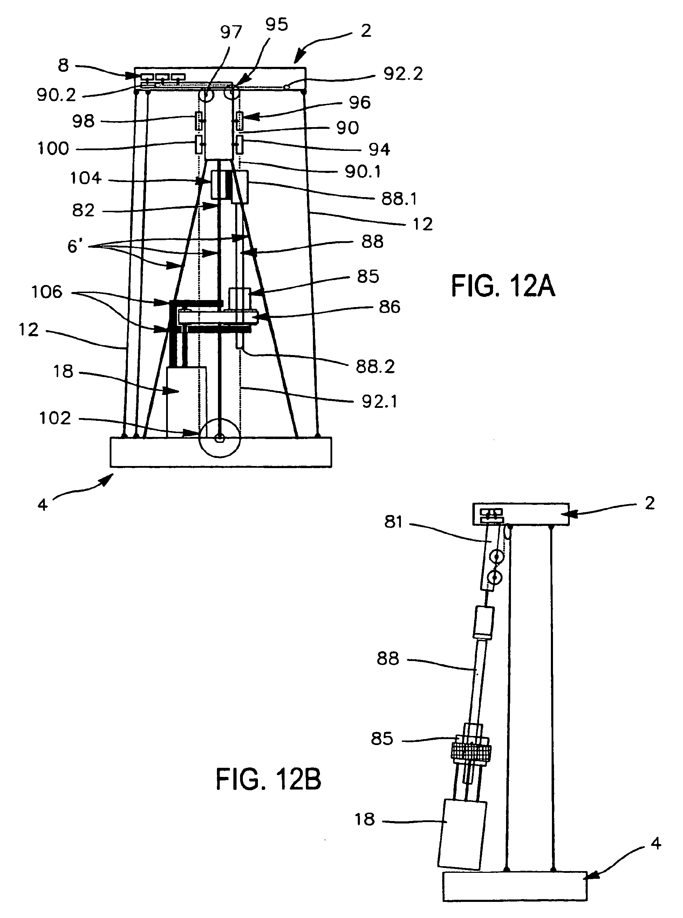

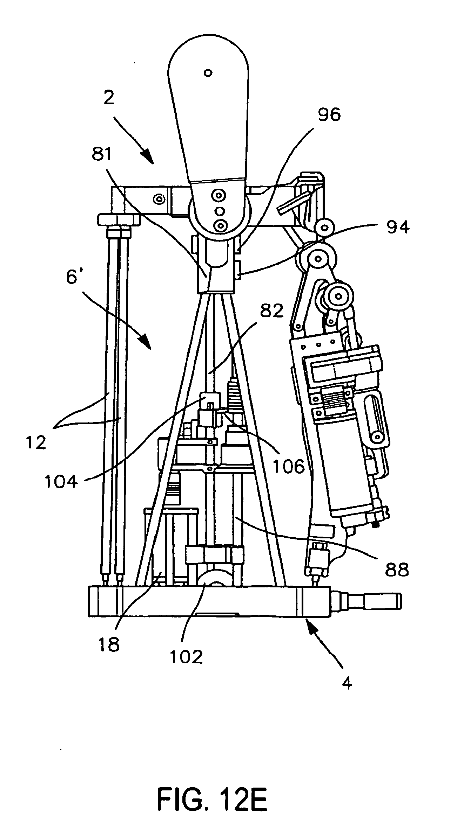

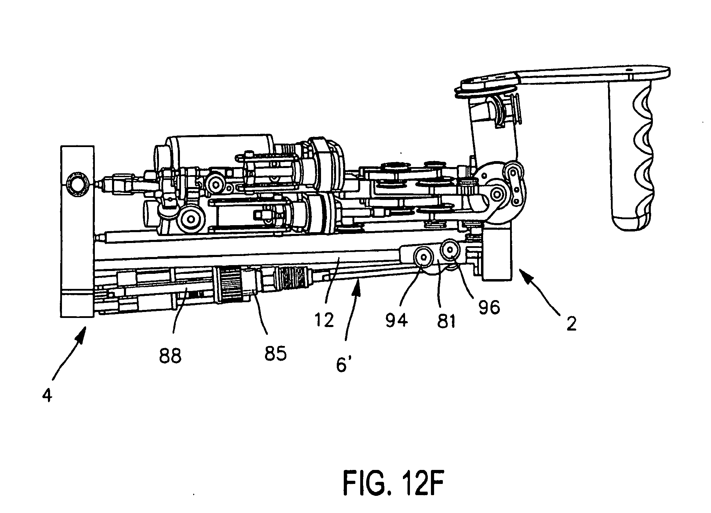

Sur les figures 12A à 12F, on peut voir une variante de réalisation du dispositif selon la présente invention.

Ce mode de réalisation diffère des modes de réalisation déjà décrits en ce que le vérin à câble est intégré dans le mât rendant le mécanisme moins encombrant

Le dispositif comporte un montant fixe 2 et un montant mobile 4 reliés entre eux par des tiges 12 et un mât 6'.

Le mât 6' diffère des mâts décrits précédemment en ce qu'il comporte trois tiges dont la tige centrale est formée par un arbre cannelé 82. Les trois tiges sont fixées directement au montant fixe 4 par une extrémité longitudinale, et sont fixées par leur autre extrémité longitudinale à une pièce de jonction 81, sur laquelle le palier porte-galet est fixé.

Le vérin à câble comporte un moteur électrique 18 fixé sur le montant fixe 4, dont l'arbre moteur 84 es parallèle à l'arbre cannelé 82, un écrou 85 entraîné par le moteur électrique au moyen d'une courroie dentée 86, une vis 88 coopérant avec l'écrou 85, la vis ayant un axe parallèle à l'arbre cannelé 82, une boucle de câble comportant un premier brin de câble 90 et un deuxième brin de câble 92.

Le premier brin 90 est fixé par une première extrémité 90.1 à une extrémité libre 88.1 de la vis orientée du côté du montant mobile 2, et à une deuxième extrémité 90.2 fixée au montant mobile 2, et un deuxième brin de câble 92 fixé par une première extrémité 92.1 à une deuxième extrémité libre 88.2 de la vis, et une deuxième extrémité 92.2 fixée au montant mobile 2.

Le premier brin de câble 90 chemine entre deux poulies de déviation 94, 96 montées sur un premier bord latéral de la pièce de jonction 81, leur axe étant parallèle à l'axe X. Les poulies 94, 96 ont pour fonction de dévier parallèlement la course du premier brin de câble, comme cela est visible sur la figure 12B.

Le premier brin de câble est ensuite dévié à angle droit par une poulie 95 montée sur la pièce de jonction 81. La poulie 95 est contenue dans un plan tangent à la portion cylindrique sur laquelle le câble est déposé.

Le deuxième brin de câble 92, à partir du montant mobile 2, est dévié à angle droit par une poulie 97, puis chemine entre deux poulies de déviation 98, 100 montées sur un deuxième bord latéral de la pièce de jonction 81, opposé au premier bord latéral. Les poulies 98, 100 ont pour fonction de dévier parallèlement la course du deuxième brin de câble. La poulie 97 est contenue dans un plan tangent à la portion cylindrique sur laquelle le câble est déposé.

Le deuxième brin de câble chemine ensuite le long de l'arbre cannelé 82 jusqu'à une poulie 102 qui renvoie le deuxième brin de câble à la deuxième extrémité de la tige 88.

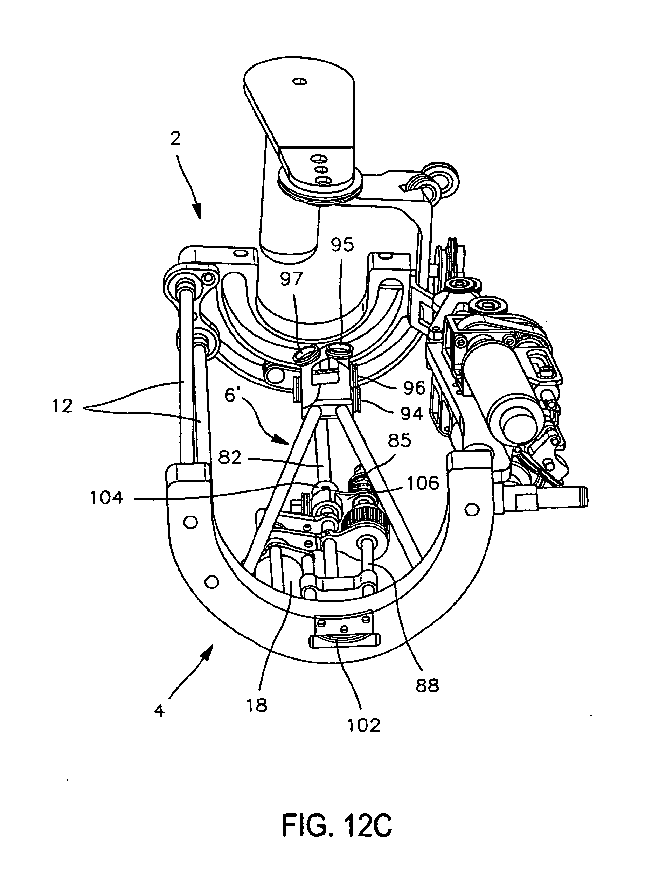

Le mécanisme des figures 12C à 12F ne comporte qu'une poulie 98. Les poulies 94, 96, 98, 100 ne sont pas toutes systématiquement nécessaires et certaines poulies peuvent être supprimées suivant la réalisation, ce qui est par exemple le cas ici pour la poulie 100.

Le vérin à câble comporte également une douille 104 monté en translation sur l'arbre cannelé, de préférence elle est à recirculation de billes pour réduire les frottements. La douille 104 est apte à se déplacer longitudinalement autour de l'arbre, mais ne peut tourner le long de l'arbre du fait de la forme cannelée.

La douille 104 est rendue solidaire de la vis 88 au niveau de sa première extrémité 88.1, par un moyen d'accouplement 106. Le moyen d'accouplement 106 est par exemple un accouplement à soufflet métallique qui présente une souplesse suffisante en flexion.

La douille assure un guidage de la vis parallèlement à l'axe X et bloque la rotation de la vis.

De manière avantageuse, l'accouplement entre la douille et la vis est élastique, ce qui permet de compenser les défauts de parallélisme et laisse la possibilité à la vis d'osciller par rapport à l'écrou. L'accouplement absorbe le défaut de parallélisme dont on pourrait craindre l'influence sur une telle structure surtout compte tenue de la longueur relativement importante de la vis. En outre, concernant l'oscillation angulaire de la vis, la douille coulissant sur l'arbre cannelé bloque la flexion angulaire de l'accouplement, contrairement à un système d'anti-rotation à galet. La douille autorise seulement la souplesse transversale en translation.

Le vérin comporte également un châssis 106 fixé sur le moteur, formé de deux flasques, s'étendant de part et d'autre de la courroie, un flasque est fixé à l'arbre cannelé et l'autre supporte le palier rotatif guidant le moyeu porte-écrou.

La courroie 86 entoure avantageusement l'arbre cannelé 82, ce qui limite l'encombrement général.

Il est prévu dans ce mode de réalisation que la connexion entre les tiges 12 et la pièce mobile débordent sur les pistes 10, ce qui permet de réduire l'encombrement transversal du mécanisme.

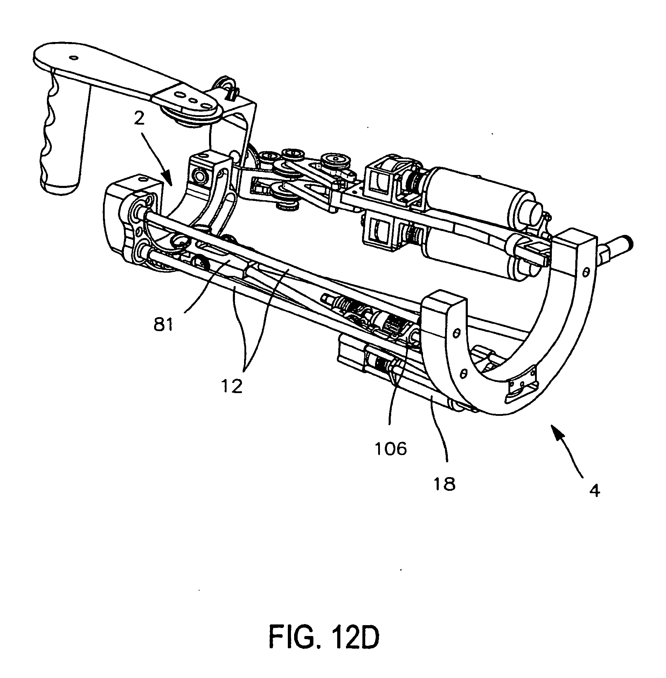

Afin d'éviter une interaction entre ces liaisons rotules et le mât 6', il est prévu de fixé le porte-galet en porte-à-faux sur la pièce de jonction 81. On prévoit également de le déporter du côté où sont accrochées les deux barres 12 les plus proches, sur la gauche sur la figure 12D, et de le décaler en arrière du plan de connexion entre la pièce mobile 2 et les tiges 12, ce qui permet d'augmenter le débattement des tiges 12.

Comme décrit précédemment, les extrémités des brins de câble sont fixées à la pièce mobile, par exemple au moyen de sertissages ancrés dans la pièce mobile. On prévoit avantageusement, que la pièce mobile 2 comporte des gorges (non visible) de forme adaptée pour compenser le mouvement de translation longitudinal intrinsèque de la pièce mobile 2 et permettre au câble d'être déposé avec un glissement latéral minimum. Le câble est maintenu latéralement dans la gorge qui empêche toute variation de sa longueur. En effet, une variation de longueur se traduirait par une variation préjudiciable de la tension du câble lors de sa circulation et réduirait la précision du mécanisme

Les gorges ont par exemple une forme de spirale.

On pourrait prévoir, de manière alternative, de monter la pièce mobile articulée autour de l'axe X, ce qui permet d'utiliser des gorges de forme classique.

Grâce à ce vérin à câble, on réduit l'encombrement du montage en supprimant les paires de rainures symétriques à galets roulants du vérin à câble connu. En effet, un vérin à câble de type connu utilise d'un côté une rainure qui serait plus large que l'arbre cannelé, et de l'autre une rainure opposée, qui viendrait s'ajouter symétriquement par rapport à la vis. L'encombrement serait donc augmenté très significativement. Ainsi l'arbre cannelé joue le rôle d'un système d'anti-rotation asymétrique particulièrement adapté pour ce vérin à câble.

Sur les figures 13A à 13C, on peut voir des variantes de réalisation d'un mécanisme selon la présente invention. Sur les figures 13A à 13C, ne sont pas représentés les moyens de guidage autour de l'axe Z du montant mobile 12, ni les moyens d'entraînement du moyen mobile autour de l'axe Z.

Nous ne décrirons que les éléments se distinguant des dispositifs déjà décrits.

Les dispositifs des figures 13A à 13C comporte une poignée 46' qui est reliée au mécanisme par son extrémité supérieure.

En outre, le cheminement des brins de câble 34, 58 pour la commande autour des axes X et Y1 respectivement sont modifiées.

Comme on peut le voir sur les figures 13A à 13C et en détail sur la figure 13A', le brin de câble 34 chemine à l'aller autour des poulies 36, 37 et au retour autour des poulies 36', 37', le cheminement au retour se faisant le long des poulies 37', 36' de manière diamétralement opposée par rapport au cheminement le long des poulies 37, 36 respectivement. En considérant l'axe reliant les poulies 36 et 36', le brin de câble 34 circule le long de la poulie 36 d'un côté de l'axe à l'aller et d'un autre coté de l'axe le long de la poulie 36' au retour, de même en considérant l'axe Y1 des poulies 37, 37'.

Le brin de câble 58 circule autour des poulies 36.1, 37 à l'aller et autour de poulies 37', 36.2 au retour de manière similaire en changeant de côté de l'axe entre l'aller et le retour.

Sur la figure 13A, en outre on peut voir que chaque tige 12 est reliée au montant mobile par une liaison cardan associée à une liaison pivot.

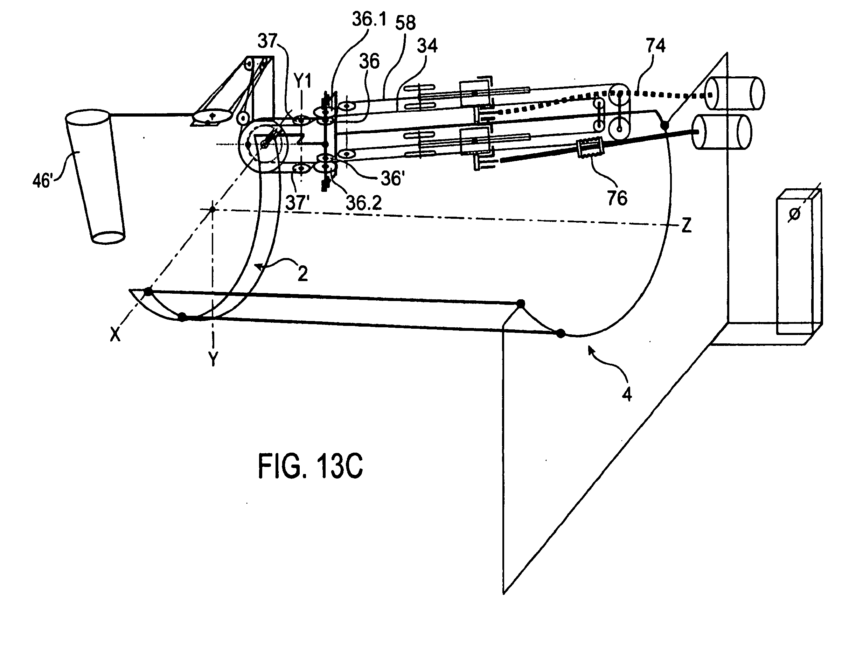

Sur la figure 13C, les vérins à câble comportent pour l'un arbre de transmission flexible 74, et pour l'autre un arbre de transmission rigide 76 avec un accouplement flexible comme dans la variante de la figure 9.

Ce mécanisme de rotation d'avant-bras et de poignet présente les avantages suivants :
- il permet de réaliser un avant-bras cinématiquement équivalent à l'avant-bras humain combiné à des débattements comparables. En outre, sa disposition longitudinale est ouverte et discrète vis-à-vis de l'anatomie humaine,
- sa morphologie conique épouse le membre humain sans proéminence gênante,
- il assure un retour d'effort réaliste en raison des caractéristiques intrinsèques des actionneurs,
- sa masse influente est réduite (couple gravité et dynamique) sur l'axe transversal de l'avant-bras, i.e. l'axe du coude, en raison du regroupement des trois moteurs à proximité de celui-ci,
- il offre une très faible inertie sur l'axe longitudinal en raison de la très faible vitesse des deux moteurs mobiles du poignet. Cet avantage est encore accru si l'on fixe les moteurs et si la transmission aux vérins s'effectue par des arbres flexibles ou des arbres rigides avec accouplements flexibles comme représenté sur la figure 9.

Il est bien entendu que l'on pourrait prévoir d'autres types d'actionneur que les actionneurs à câbles, par exemple du type à engrenage ou à courroie et pignon.

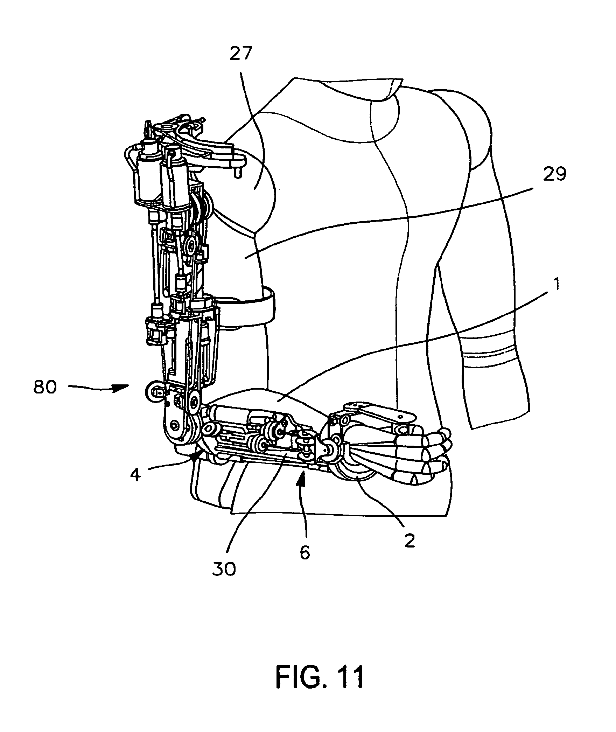

L'utilisation du mécanisme d'avant-bras à trois rotations précédemment décrit permet de réaliser une orthèse à sept axes 80 comme représenté sur la figure 11, les deux axes du poignet s'ajoutant aux cinq axes déjà décrits.

Cette orthèse est cinématiquement équivalente au membre supérieur humain et donc d'usage universel tout en conservant les dispositions favorables de celle à cinq axes précédemment décrite, i.e. une morphologie épousant celle de la personne sans l'emprisonner, un retour d'effort et une faible inertie.

Les orthèses à cinq ou sept axes peuvent être mises en oeuvre dans le domaine d'assistance aux handicapés, en contribuant à l'assistance ou à la suppléance et dans le domaine de la rééducation à poste fixe ou ambulatoire.

Elles peuvent également être utilisées dans le domaine de la réalité virtuelle pour la manipulation d'objets virtuels et permettre un libre déplacement dans une salle immersive dès lors qu'elle peut être portée par l'opérateur.

Dans le domaine de la téléopération, ces orthèses offrent une bonne ergonomie et une manipulation naturelle. Par ailleurs, un équilibrage du poids du bras de l'opérateur permet une réduction de fatigue, le travail pouvant même alors être effectué par des personnes handicapées moteurs. Elles permettent également la commande naturelle d'un bras redondant (7 axes) et la coordination naturelle de deux bras esclaves

Elles peuvent également être mises en oeuvre dans l'assistance au geste professionnel, et dans le domaine militaire pour l'amplification d'effort.

Dans le cas de l'utilisation en téléopération, un levier de commande de la pince pourrait avantageusement être ajouté. Celui-ci pourrait être équipé d'un capteur de position ou, le cas échéant, d'un actionneur spécifique à retour d'effort pour restituer la sensation de serrage.

Il est bien entendu, qu'en fonction des applications, le mécanisme proposé pourrait-être complété par d'autres axes, par exemple, par une poignée de commande de serrage d'une pince pour la téléopération, par une « main » simplifiée, etc.

## Revendications

1. Mécanisme de rotation pour avant-bras comportant un montant mobile (2) destiné à supporter un poignet, le montant mobile (2) comportant au moins une piste de guidage en arc de cercle, un montant fixe (4) destiné à supporter l'extrémité arrière d'un avant-bras, des tiges (12) rigides en longueur reliant le montant mobile (2) et le montant fixe (4) et permettant une rotation du montant mobile (2) par rapport au montant fixe (4) autour d'un axe longitudinal (Z), grâce à des liaisons articulées en rotation (14, 32), et un mât (6, 6') lié à l'une de ses extrémités rigidement au montant fixe (4), et relié à son autre extrémité à un palier porte-galets, dont les galets (8) sont en contact roulant avec la au moins une piste de guidage du montant mobile (2), les galets (8) imposant un pivotement du montant mobile (2) autour d'un axe longitudinal (Z), la direction dudit axe longitudinal (Z) passant par le centre de l'arc de cercle de la piste de guidage d'une part, et par le centre d'un cercle défini par les extrémités des tiges reliées au montant fixe d'autre part.

2. Mécanisme selon la revendication 1, dans lequel au moins une liaison articulée de chaque tige est une liaison rotule, une liaison rotule associée à une liaison pivot, une liaison équivalente composée de trois rotations autour de trois axes, par exemple, un cardan associé à une liaison pivot concourant au centre du cardan, ou tout autre liaison ou combinaison de liaison équivalente, et l'autre liaison articulée de chaque tige est une liaison permettant au moins deux rotations autour de deux axes orthogonaux concourants ou non.

3. Mécanisme selon la revendication 2, dans lequel les liaisons articulées en rotation reliant les tiges (12) à l'un parmi le montant mobile (2) et le montant fixe (4) sont des liaisons rotules, une liaison rotule associée à une liaison pivot, une liaison équivalente composée de trois rotations autour de trois axes, par exemple, un cardan associé à une liaison pivot concourant au centre du cardan, ou tout autre liaison ou combinaison de liaison équivalente et dans lequel les liaisons articulées reliant les tiges (12) à l'autre parmi le montant fixe (4) et le montant mobile (2) sont des liaisons permettant au moins deux rotations autour de deux axes orthogonaux concourants ou non .

4. Mécanisme selon l'une des revendications précédentes, dans lequel le montant fixe (4) est une portion d'arc de cercle de rayon supérieur à celui du montant mobile(2), de manière à définir un mécanisme de forme tronconique dont les tiges (12) sont les génératrices.

5. Mécanisme selon l'une des revendications précédentes, comprenant en outre un système d'actionnement entraînant la rotation du montant mobile (2) autour dudit axe longitudinal(Z).

6. Mécanisme selon la revendication précédente, dans lequel le système d'actionnement comporte un pignon engrenant avec un secteur denté solidaire du montant mobile (2), le pignon étant entraîné par un moteur électrique, ou une courroie engrenant d'une part un pignon et d'autre part un secteur denté solidaire du montant mobile (2), le pignon étant entraîné par un moteur électrique, ou un vérin réversible à câble entraîné par un moteur électrique.

7. Mécanisme selon la revendication 6, dans lequel le moteur est monté à proximité du montant fixe (4).

8. Mécanisme selon l'une des revendications 1 à 3 en combinaison avec la revendication 6 ou 7, dans lequel le mât (6') comporte deux tiges latérales et une tige centrale, toutes trois connectées par une extrémité longitudinale au montant fixe (4) et par une autre extrémité à un plaque de jonction (81) portant le palier porte-galet, la tige centrale étant un arbre cannelé (82), le vérin à câble comportant un moteur (18) fixé sur le montant fixe (4) , une vis (88) sensiblement parallèle à l'arbre cannelé (82), un écrou (85) monté sur la vis (88) , un câble fixé à la vis (88) et à la pièce mobile (2), ledit écrou (85) étant entraîné en rotation par le moteur électrique (18), une douille (104) apte à coulisser sur l'arbre cannelé (82), la douille (104) étant solidaire de la vis (88), de sorte à l'empêcher de tourner.

9. Mécanisme selon la revendication précédente, dans lequel la solidarisation entre la douille (104) et la vis (88) étant du type élastique.

10. Mécanisme selon l'une des revendications 8 ou 9, dans lequel le palier porte-galet est en porte-à-faux sur la plaque de jonction (81), décalée latéralement par rapport à l'axe longitudinal (Z).

11. Mécanisme selon l'une des revendications 8 à 10, dans lequel la pièce mobile (2) comporte des gorges pour guider les extrémités du câble, celles-ci ayant une forme telles qu'elles compensent le mouvement de translation longitudinal intrinsèque de la pièce mobile (2).

12. Mécanisme selon l'une des revendications 8 à 10, dans lequel la pièce mobile (2) comporte des gorges pour guider les extrémités du câble, la pièce mobile (2) étant articulée autour d'un axe transversal (X) pour compenser le mouvement de translation longitudinal intrinsèque de la pièce mobile (2) .

13. Mécanisme selon l'une des revendications précédentes, comportant deux articulations de rotation transverses supplémentaires destinées à reproduire les deux articulations du poignet, lesdites articulations étant situées au niveau du montant mobile(2).

14. Mécanisme selon la revendication 13, comportant une platine (30) reliée au montant mobile (2) par deux liaisons pivots à axes orthogonaux et reliée au montant fixe (4) par une liaison rotule, une rotule associée à une liaison pivot, ou une liaison équivalente composée de trois rotations autour de trois axes, par exemple, un cardan associé à une liaison pivot concourant au centre du cardan, ou tout autre liaison ou combinaison de liaison équivalente, ladite platine (30) supportant un premier actionneur (40) apte à mettre en rotation un premier segment autour d'un axe transverse du poignet (X) et un deuxième actionneur apte à mettre en rotation un deuxième segment autour d'un axe transverse (Y) du poignet, le deuxième segment étant porté par le premier segment.

15. Mécanisme selon la revendication 14, dans lequel le premier (40) et le deuxième actionneur sont des vérins réversibles à câble comportant chacun un câble (34, 58) se refermant en boucle et cheminant le long de la platine jusqu'à des poulies menantes solidaires en rotation du premier et deuxième segment respectivement.

16. Mécanisme selon l'une des revendications 14 ou 15, comportant des poulies de renvoi d'axe confondu avec l'axe de l'un des pivots.

17. Orthèse pour membre supérieur à cinq axes de rotation ou à sept axes de rotation comportant un mécanisme selon l'une des revendications précédentes, relié à un segment destiné à border le bras.

## Claims

1. Rotation mechanism for a forearm which comprises a moving stay (2) designed to support a wrist, where the moving stay (2) includes at least one guide track in the form of an arc of a circle, a fixed stay (4) designed to support the rear end of a forearm, rods (12) that are rigid lengthwise which link the moving stay (2) and the fixed stay (4) and which allow the moving stay (2) to rotate relative to the fixed stay (4) around a longitudinal axis (Z), by means of articulated links which can rotate (14, 32), and a strut (6, 6') rigidly linked at one of its ends to the fixed stay (4), and linked at its other end to a roller-bearing, whose rollers (8) are in rolling contact with at least one guide track of the moving stay (2), where the rollers (8) cause the moving stay (2) to pivot around a longitudinal axis (Z), where the direction of said longitudinal axis (Z) passes on the one hand through the centre of the arc of the circle of the guide track and on the other hand through the centre of a circle defined by the ends of rods linked to the fixed stay.

2. Mechanism according to claim 1, in which at least one articulated link on each rod is a ball-joint link, a ball-joint combined with a pivot link, an equivalent link made up of three rotations around three axes, for example, a cardan joint combined with a pivot link which is concurrent with the centre of the cardan joint, or any other link or equivalent combination of links, and the other articulated link of each rod is a link which allows at least two rotations around two orthogonal axes whether concurrent or not.

3. Mechanism according claim 2, in which the links which are articulated in rotation and which connect the rods (12) to one of the moving stay (2) or the fixed stay (4) are ball-joint links, a ball-joint link combined with a pivot link, an equivalent link made up of three rotations around three axes, for example, a cardan joint combined with a pivot link which is concurrent with the centre of the cardan joint, or any other link or equivalent combination of links, and where the articulated links connecting the rods (12) to the other of the fixed stay (4) or the moving stay (2) are links which allow at least two rotations around two orthogonal axes whether concurrent or not.

4. Mechanism according to one of the previous claims in which the fixed stay (4) is a segment of an arc of a circle whose radius, is greater then that of the moving stay (2), so that it defines a mechanism with a truncated cone form whose generatrices are the rods (12) .

5. Mechanism according to one of the preceding claims, which in addition comprises an actuation system which drives the rotation of the moving stay (2) around the said longitudinal axis (Z)

6. Mechanism according to claim 5 in which the actuation system comprises a pinion which engages, with a toothed segment which is firmly fixed to the moving stay (2), where the pinion is driven by an electric motor, or a belt which engages on the one hand with a pinion and on the other hand with a toothed segment which is firmly fixed to the moving stay (2), where the pinion is driven by an electric motor, or a reversible cable cylinder driven by an electric motor.

7. Mechanism according to la revendication 6, in which the motor is mounted close to the fixed stay (4).

8. Mechanism according to one of claims 1 to 3 in combination with claim 6 or 7, in which the strut (6') comprises two lateral rods and one central rod, all three connected at one longitudinal end to the fixed stay (4) and at the other end to a junction plate (81) which bears the roller-bearing, where the central rod is a splined shaft (82), where the cable actuator comprises a motor (18) fixed to the fixed stay (4), a screw (88) which is approximately parallel to the splined shaft (82), a nut (85) mounted on the screw, a cable fixed to the screw (88) and to the moving part (2), where the said nut (85) is made to rotate by the electric motor (18) , a bush (104) designed to slide on the splined shaft (82), where the bush is firmly fixed to the screw (88), so that it is prevented from turning.

9. Mechanism according to the previous claim, in which the firm attachment between the bush (104) and the screw (88) is of the elastic type.

10. Mechanism according to one of claims 8 to 10, in which the roller-bearing overhangs over the junction plate (81), laterally offset in relation to the longitudinal axis (Z).

11. Mechanism according to one of claims 8 to 10, in which the moving part (2) comprises grooves to guide the ends of the cables, with the form of these being such that they compensate for the intrinsic longitudinal translation movement of the moving part (2).

12. Mechanism according to one of the previous claims which comprises two additional transverse rotation articulations designed to reproduce the two articulations of the wrist, said articulations being located at the moving stay (2).

13. Mechanism according to one of the previous claims which comprises two additional transverse rotation articulations designed to reproduce the two articulations of the wrist, said articulations being located at the moving stay (2).

14. Mechanism according claim 13, which comprises a plate (30) linked to the moving stay (2) by two pivot links with orthogonal axes and linked to the fixed stay (4) by a ball-joint link, a ball-join combined with a pivot link or an equivalent link made up of three rotations around three axes, for example a cardan joint combined with a pivot link concurrent with the centre of the cardan joint, or any other link or equivalent combination of links, where said plate (30) supports a first actuator (40) capable of causing a first segment to rotate around a transverse axis of the wrist (X) and a second actuator capable of causing a second segment to rotate around a transverse axis (Y) of the wrist, where the second segment is carried on the first segment.

15. Mechanism according to claim 14 .in which the first (40) and second actuators are reversible cable cylinders each comprising a cable (34, 58) formed into a loop and which passes along the plate up to the guide pulleys which are firmly fixed in rotation to the first and second segments respectively.

16. Mechanism according to claim 14 or 15, which comprises guide pulleys with the same axes as the axis of one of the pivots.

17. Arm orthesis with five axes of rotation or with seven axes of rotation which comprises a mechanism according to one of the preceding claims, connected to a segment designed to run alongside the arm.

## Patentansprüche

1. Unterarm-Drehmechänisnius, umfassend: ein bewegliches Gestell (2), dazu bestimmt, ein Handgelenk aufzunehmen, wobei das bewegliche Gestell (4) wenigstens eine kreisbogenförmige Führungsbahn umfasst, und ein festes Gestell (4), dazu bestimmt, das hintere Ende eines Unterarms aufzunehmen, wobei steife Stangen (12) das bewegliche Gestell (2) und das feste Gestell (4) verbunden und dank Drehgefenkverbindungen (14, 32) eine Drehung des beweglichen Gestells (2) in Bezug auf das feste Gestell (4) um eine Längsachse (Z) ermöglichen, und einen Mast (6, 6'), mit einem seiner Enden starr mit dem festen Gestell (4) verbunden, und mit seinem anderem Ende mit einem Rollenlager verbunden, dessen Rollen (8) sich im Rollkontakt mit wenigstens einer Führungsbahn des beweglichen Gestells (2) befinden, wobei die Rollen (8) eine Schwenkbewegung des beweglichen Gestells (2) um eine Längsachse (Z) erzwingen und die Richtung der genannten Längsachse (Z) einerseits durch den Mittelpunkt des Kreisbogens der Führungsbahn verläuft und andrerseits durch den Mittelpunkt eines Kreises, der definiert wird durch die Enden der mit dem festen Gestell verbundenen Stangen.

2. Mechanismus nach Anspruch 1, bei dem wenigstens eine Gelenkverbindung jeder Stange eine Kugelgelenkverbindung, eine Kugelgelenkverbindung in Verbindung mit einer Schwenkverbindung, eine Äquivalenzverbindung ist, zusammengesetzt aus drei Drehungen um drei Achsen, .zum Beispiel ein Kardangelenk in Verbindung mit einer Schwenkverbindung, sich kreuzend im Mittelpunkt des Kardangelenks, oder jede andere Verbindung oder Äquivalenzverbindungskombination, und die andere Gelenkverbindung jeder Stange eine Verbindung ist, die wenigstens zwei Drehungen um zwei orthogonale Achsen, sich kreuzend oder nicht, ermöglicht.

3. Mechanismus nach Anspruch 2, bei dem die Kugelgelenkverbindungen, welche die Stangen (12) mit dem einen, beweglichen (2) oder festen (4), Gestell verbinden, Kugelgelenkverbindungen, eine Kugelgelenkverbindung in Verbindung mit einer Schwenkverbindung, eine Äquivalenzverbindung zusammengesetzt aus drei Drehungen um drei Achsen, zum Beispiel ein Kardangelenk in Verbindung mit einer Schwenkverbindung, sich kreuzend im Mittelpunkt des Kardangelenks, oder irgend eine andere Verbindung oder Äquivalenzverbindungskombination, und bei dem die Gelenkverbindungen, welche die Stangen mit dem anderen, dem festen (4) oder dem beweglichen (2) Gestell verbinden, Verbindungen sind, die wenigstens zwei Umdrehungen um zwei Achsen, sich kreuzend oder nicht, ermöglichen.

4. Mechanismus nach einem der vorhergehenden Ansprüche, bei dem das feste Gestell (4) ein Kreisbogenabschnitt mit einem größeren Durchmesser als demjenigen des beweglichen Gestells (2) ist, derart einen kegelstumpfförmigen Mechanismus definierend, dessen Stangen (12) die Mantellinien sind.

5. Mechanismus nach einem der vorhergehenden Ansprüche, außerdem ein Betätigungssystüm zum Drehen des beweglichen Gestells (2) um die Längsachse (Z) umfassend,

6. Mechanismus nach einem der vorhergehenden Ansprüche, bei dem das Betätigungssystem ein Zahnrad umfasst, das in einen fest mit dem beweglichen Gestell (2) verbundenen gezahnten Sektor eingreift, wobei das Zahnrad angetrieben wird durch einen Elektromotor, oder einen Antriebsriemen, der einerseits in ein Zahnrad eingreift und andrerseits in einen fest mit dem beweglichen Gestell (2) verbundenen gezahnten Sektor, wobei das Zahnrad durch einen Elektromotor angetrieben wird, oder einen umsteuerbaren Kabelzylinder, angetrieben durch einen Elekromotor.

7. Mechanismus nach Anspruch 6, bei dem der Motor in der Nähe des festen Gestells (4) montiert ist.

8. Mechanismus nach einem der Ansprüche 1 bis 3 in Verbindung mit Anspruch 6 oder 7, bei dem der Mast (6') zwei Seitenstangen und eine Mittelstange umfasst, die alle drei durch ein Längsrichtungsende mit dem festen Gestell (4) verbunden sind und durch ein anderes Ende mit einer das Rollenlager tragenden Verbindungsplatte (81), wobei die Mittelstange eine Keilwelle (82) ist und der Kabelzylinder umfasst: einen auf dem festen Gestell (4) befestigen Motor (18), eine Schraube (88), im Wesentlichen parallel zu der Keilwelle (82), eine auf die Schraube (88) montierte Mutter (85), ein an der Schraube (88) und an dem beweglichen Stücks (2) befestigtes Kabel, wobei die genannte schraube (85) durch einen Elektromotor (18) in Drehung versetzt wird, eine Hülse (104), fähig auf der Keilwelle (82) zu gleiten, wobei die Hülse (104) fest mit der Schraube (88) verbunden ist, so dass sich diese nicht drehen kann.

9. Mechanismus nach dem vorhergehenden Anspruch, bei dem die Befestigung zwischen der Hülse (104) und der Schraube (88) vom elastischen Typ ist.

10. Mechanismus nach einem der Ansprüche 8 oder 9, bei dem das Rollenlager von der Verbindungsplatte (81) auskragt, seitlich versetzt in Bezug auf die Längsachse (Z).

11. Mechanismus nach einem der Ansprüche 8 bis 10, bei dem das bewegliche Stück (2) Rillen zur Führung der Enden des Kabels umfasst, wobei diese eine derartige Form aufweisen, dass sie die intrinsische longitudinale Translationsbewegung des beweglichen Gestells (2) kompensieren.

12. Mechanismus nach einem der Ansprüche 8 bis 10, bei dem das bewegliche Stück (2) Rillen zur Führung der Enden des Kabels umfasst, wobei das bewegliche Stück (2) um eine transversale Achse (X) herum gelenkig ist, um die intrinsische longitudinale Translationsbewegung des beweglichen Stücks (2) zu kompensieren.

13. Mechanismus nach einem der vorhergehenden Ansprüche, zwei zusätzliche transversale Kugelgelenkverbindungen umfassend, dazu bestimmt, die beiden Gelenke des Handgelenks zu reproduzieren, wobei sich die genannten Gelenke in Hohe des beweglichen Gestells (2) befinden.

14. Mechanismus nach Anspruch 13, umfassend eine Platine (30), verbunden mit dem beweglichen Gestell (2) durch zwei Schwenkverbindungen mit orthogonalen Achsen, und verbunden mit dem festen Gestell (4) durch ein Kugelgelenk, ein Kugelgelenk in Verbindung mit einer Schwenkverbindung, oder eine Äquivalenzverbindung, zusammengesetzt aus drei Drehungen um drei Achsen, zum Beispiel ein Kardangelenk in Verbindung mit einer Schwenkverbindung, sich kreuzend im Mittelpunkt des Kardangelenks, oder irgend eine andere Verbindung oder Äquivalenzverbindungskombination, wobei die genannte Platine (30) einen ersten Stellantrieb (40), fähig ein erstes Segment um eine Transversalachse (X) des Handgelenks zu drehen, und einen zweiten Stellantrieb, fähig ein zweites Segment um eine Transversalachse (Y) des Handgelenks zu drehen, trägt, und das zweite Segment durch das erste Segment getragen wird.

15. Mechanismus nach Anspruch 14, bei dem der erste (40) und der zweite Stellantrieb umsteuerbare Kabelzylinder sind, von denen jeder ein eine geschlossen Schleife bildendes Kabel (34, 58) umfasst, längs der Platine verlaufend, bis zu Rollen bzw, Treibrollen, jeweils drehgekoppelt mit dem ersten und zweiten Segment.

16. Mechanismus nach einem der Ansprüche 14 oder 15, Umlenkrollen umfassend, deren Achse mit der Achse von einem der Schwenkgelenke (pivots) zusammenfällt.

17. Arm-Orthese mit fünf Drehachsen oder sieben Drehachsen, einen Mechanismus nach einem der vorhergehenden Ansprüche umfassend, verbunden mit einem zum Einfassen des Arms bestimmten Segment.
